# EUROPÄISCHE PATENTSCHRIFT

(11) **EP 1 437 814 B1**
(45) Veröffentlichungstag und Bekanntmachung des Hinweises auf die Patenterteilung: **19.04.2006**
(21) Anmeldenummer: 03000720.7
(22) Anmeldetag: 13.01.2003
(51) Int. Cl.: H02H 9/04, H04M 1/74

(54) **Überspannungsschutzgerät**
Overvoltage protection device
Dispositif de protection contre les surtensions

(43) Veröffentlichungstag der Anmeldung: 14.07.2004
(73) Patentinhaber: Siemens Schweiz AG, 8047 Zürich (CH)
(72) Erfinder: Kopp, Peter, 8967 Widen (CH); Allegranza, Patrik, 8004 Zürich (CH)
(74) Vertreter: Kley, Hansjörg

(56) Entgegenhaltungen:
- DE-A- 4 005 076
- US-A- 4 438 477
- US-A- 4 901 183
- DEHN + SÖHNE: "Überspannungsschutz Hauptkatalog 2002" [Online] 1. Mai 2002 (2002-05-01) XP002241438 Gefunden im Internet: <URL: http://www.dehn.de/www_DE/frameset_www.htm l> [gefunden am 2003-05-16] * Seite 152 *

## Beschreibung

Die vorliegende Erfindung betrifft ein Abschlussgerät nach dem Oberbegriff des Patentanspruchs 1.

Die vorliegende Erfindung betrifft das Gebiet des Zugangsnetzes (Access Network) bei dem z.B. über eine Zweidraht-Kupfer-Leitung ein sogenannter Breitbandzugang für Internetdienste und über dieselbe Leitung ein Zugang für ISDN-Dienste oder POTS-Dienste ermöglicht wird. Eine solche Netzabschlusskonfiguration ist in [2] für einen über eine zweidraht-Kupfer-Leitung kombinierten ADSL-ISDN-Zugang offenbart.

Netzabschlusskonfigurationen der vorstehend erwähnten Art umfassen einen Splitter, der die den ISDN- und ADSL-Diensten zugeordneten Frequenzbänder trennt und dadurch die entsprechenden Anschlusstechnologien so verfügbar macht, als ob diese direkt einer Vermittlungs- oder Verteilstelle entstammen. An einen Splitter auf der Teilnehmerseite sind dementsprechend eine Schnittstelle U für den Anschluss eines ISDN-Netzabschlussgerätes (NT1) und eine «ADSL»-Schnittstelle für den Anschluss eines entsprechenden handelsüblichen ADSL-Modems vorgesehen. An einem solchen Modem ist ein Personalcomputer z.B. über eine USB-Schnittstelle oder eine 10BaseT-Schnittstelle angeschlossen. Anstelle eines Netzabschlussgerätes NT1 könnte an einer analogen Schnittstelle a/b auch ein entsprechender Telefonapparat oder ein FAX-Gerät der Gruppe 3 angeschlossen werden.

Da ein solcher Splitter direkt am Zugangsnetz angeschlossen ist, ergibt sich durch z.B. Blitzeinwirkungen oder aufgrund galvanischer oder induktiver Übertragung die Gefahr, dass der Splitter und die dahinter angeschlossenen Geräte einer Spannung ausgesetzt werden, die zu einer Beschädigung dieser Geräte führen.

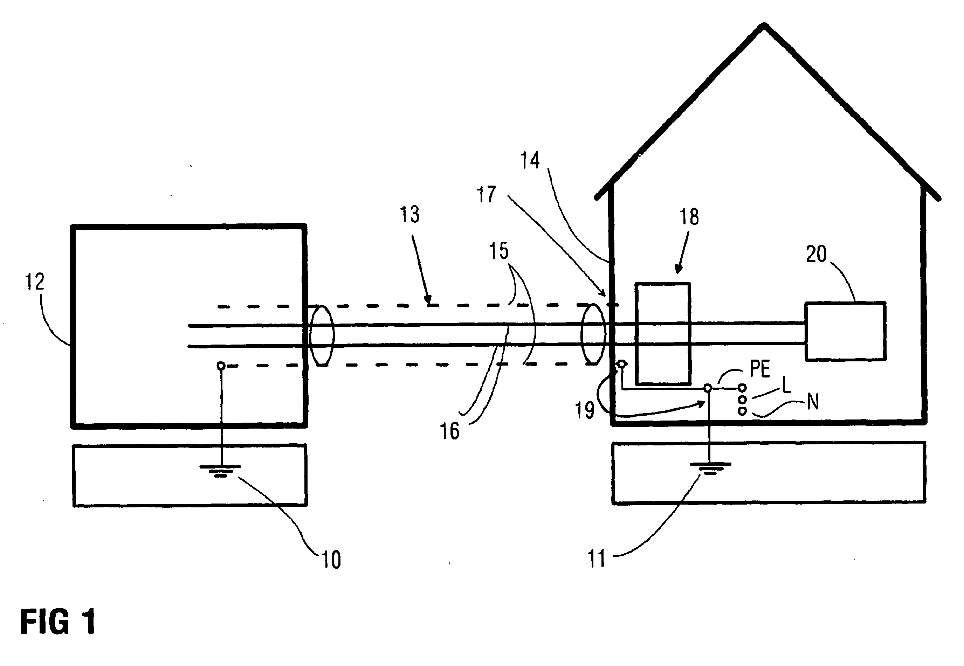

Dieses Problem kann so gelöst, dass im Bereich der sogenannten Hauseinführung Überspannungsschutzeinrichtungen - im Kontext dieser Schrift auch «elektrische Schutzelemente» genannt - montiert sind. Dabei ist auch für die Anordnung dieser Überspannungsschutzeinrichtung ein erheblicher Aufwand zu leisten. Dieser an und für sich sehr zweckmässige Schutz ist darüber hinaus nicht oder nicht mehr vorhanden, weil diese Überspannungsschutzeinrichtungen entweder veraltet sind oder nicht korrekt installiert sind oder durch eine Manipulation von nicht autorisierten Person ihrer Schutzwirkung beraubt wurden. Ein Beispiel für eine falsche Installation ist der fehlende Potentialausgleich. In Fig. 1 ist ein Schema einer solchen Hauseinführung gezeigt, bei dem der Schirm der Zugangsleitung mit der Schutzerde PE der Hausinstallation verbunden ist.

Die Anforderungen an den Überspannungsschutz sind z.B in ITU-T K.21 [1] sowie in ETSI ETR 328 [2] und ITU G. 992.1 [3] festgelegt und betreffen den sogenannten Surge. Unter den Begriff «Surge» fallen Stoss-Spannungen, die auf einer Leitung an ein Gerät zugeführt werden. Diese Stoss-Spannungen weisen ein eher niederfrequentes Spektrum auf, ihre Impulse sind jedoch relativ energiereich, folgende Grössenordnung:
Impulsdauer: einige 100 µs,
Anstiegszeit: 1 - 10 µs,
Energie eines Impulses: einige 100 J.
Mit sogenannten Surge-Tests werden Überspannungsvorgänge nachgebildet, die durch Schaltvorgänge im 230 V Netz oder durch Blitzeinwirkungen im 230 V Netz oder im Zugangsnetz hervorgerufen werden.

In US 4,438,477 (John Caley, «Combination power and communication line apparatus») ist ein Steckergerät offenbart, das für den Anschluss eines Kommunikationsgerätes vorgesehen ist. Dieses Steckergerät weist sowohl für die Datenleitungen wie auch für die Energieversorgungsleitungen elekrische Schutzelemente auf.

Die in DE 40 05 076 C2 offenbarte Überspannungsschutzeinrichtung für Daten verarbeitende Geräte unterscheidet sich vom in US 4,438,477 vorgeschlagenen Steckergerät dadurch, als es eine gemeinsame Trägerplatine aufweist und dessen Masseleitung als elektrische Kopplung dient, die den PE-Schutzleiter des Versorgungsnetzes mit der Masse des Datennetzes elektrisch verbindet. Die Funktion für den Anwender dieses Gerätes ist dadurch unbeeinflusst.

Beiden vorgeschlagenen Lösungen ist gemeinsam, dass es dem Anwender freigestellt ist, die Datenleitungen über die betreffende Überspannungsschutzeinrichtung zu führen.

Im Sinne dieser Schrift wird unter dem Begriff Abschlussgerät ein Gerät zum Anschluss an ein Telekommunikationsnetz verstanden, das beispielsweise eine oder mehrere Funktionen eines Splitters, eines Network Terminators NT im Sinne von ETS 102 080 oder eines ADSL-Modems im Sinne von ETSI TS 101 388 enthält.

Der vorliegenden Erfindung liegt daher die Aufgabe zugrunde, ein Abschlussgerät zum Anschluss von Netzabschlussgeräten und/oder Kommunikationsgeräten an ein Zugangsnetz anzugeben, das technisch gesehen den Anwender zur Führung der Datenleitungen über dieses Abschlussgerät zwingt und auch bei fehlerhafter oder gar fehlender Installation eines Überspannungsschutzes am Hauseingang unempfindlich ist gegenüber Überspannungseinwirkungen auf der Energieversorgungs- wie auch auf der Zugangsleitung und darüber hinaus die angeschlossenen Netzabschlussgeräten und/oder Kommunikationsgeräten vor Überspannungseinwirkungen schützt.

Diese Aufgabe wird erfindungsgemäss durch die im Patentanspruch 1 angegebenen Massnahmen gelöst.

Dadurch ist ein Abschlussgerät geschaffen, das auf sehr einfache Weise «Plug and play» durch Laien korrekt in Betrieb genommen werden kann und unabhängig von der jeweiligen Konfiguration der Hausinstallation ist. Auf diese Weise kann einem Teilnehmer eine Grundkonfiguration für den Anschluss eines ADSL-Modems und eines weiteren Kommunikations- oder Netzabschlussgerätes angeboten werden. Aufgrund der im Abschlussgerät enthalten Funktion ist der Anwender gezwungen, die Datenleitungen über dieses Gerät zu führen, ansonst das korrekte Funktionieren der angeschlossenen Geräte gar nicht möglich ist. Darüber hinaus sind die angeschlossenen wirksam vor Überspannungseinwirkungen auf dem Zugangsnetz geschützt.

Vorteilhafte Ausgestaltungen der Erfindung sind in weiteren Ansprüchen angegeben.
i) Dadurch, dass
   die Schutzelemente mit der Schutzerde elektrisch verbunden sind und dass das Abschlussgerät eine Steckdose für die Speisung eines Netzabschluss- oder Kommunikationsgerätes aufweist;
   ist extern kein Potentialausgleich mehr erforderlich und Netzabschluss- oder Kommunikationsgerätes sind auf einfachste Weise zur Energieversorgung anschliessbar.
ii) Dadurch, dass
   zwischen den beiden Sicherungen eine Kontroll-Lampe geschaltet ist und die Induktivitäten mit je einem Kontakt der Steckdose direkt verbunden sind;
   kann der Betriebszustand des Abschlussgerätes leicht erkannt werden.
iii) Dadurch, dass
   das Abschlussgerät für eine feste Montage als Unterputz-oder Aufputzgerät ausgebildet ist;
   ist das Abschlussgerät vielfältig einsetzbar
iv) Dadurch, dass
   die Schutzelemente so dimensioniert sind, dass das Abschlussgerät Anforderungen für einen Überspannungsschutzlevel in einem Bereich von 2 kV bis 12 kV erfüllt; ist der Schutzlevel an die jeweiligen Anforderungen anpassbar und die angeschlossene Netzabschluss- oder Kommunikationsgeräte sind auch gegenüber nicht normkonformen Überspannungseinwirkungen wirksam geschützt.

Ein Ausführungsbeispiel der Erfindung und die Gegenüberstellung zum Stand der Technik wird nachfolgend anhand der Zeichnung näher erläutert. Dabei zeigen:
- Figur 1: Konfiguration zum Überspannungsschutz bei einer Hausinstallation;
- Figur 2: Blockschaltbild eines erfindungsgemässen Abschlussgerätes in der Funktion eines Splitters;
- Figur 3: Realisierung der Schutzschaltung bei der Hauseinführung mit Gasableitern;
- Figur 4: |U| - R - Kennlinie eines Schutzelementes.

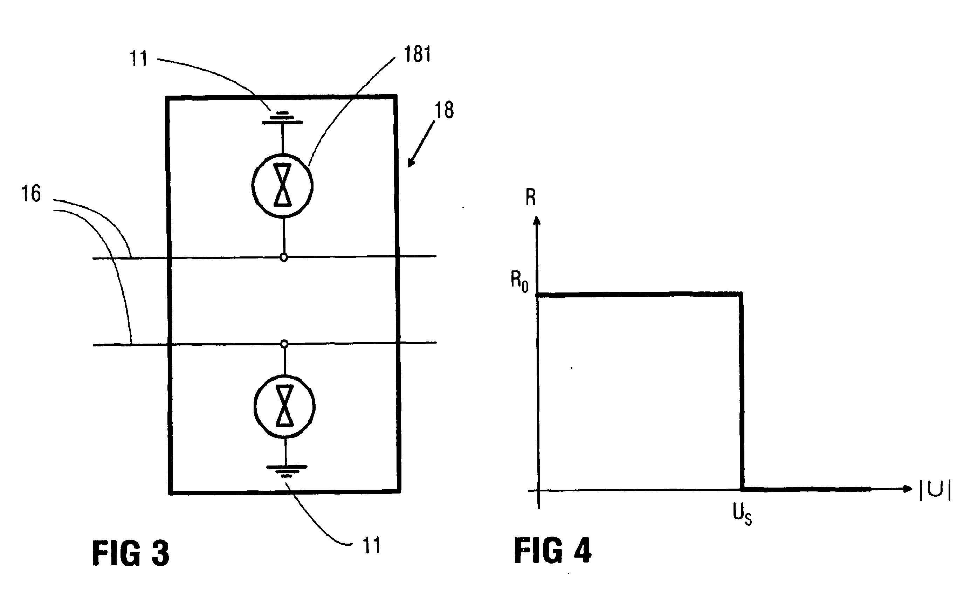

Zum besseren Verständnis der vorliegenden Erfindung wird nochmals auf die Fig. 1 Bezug genommen. Fig. 1 zeigt eine aus dem Stand der Technik bekannte Konfiguration einer Hauseinführung 17. Das Zugangsnetz 15 führt von einer Zentrale 12 zu einem Haus 14 und wird wenigstens gebildet aus einer paarig angelegten Zugangsleitung 16. Optional sind die Leitungen des Zugangsnetzes 13 geschirmt, das heisst die Zugangsleitung ist von einem elektrischen Schirm 13 des Zugangskabels umgeben. Der Schirm 13 ist auf Seite der Zentrale 12 mit der sogenannten Zentralen-Erde 10 verbunden und entsprechend auf der Seite des Teilnehmers, das heisst des Hauses mit der Gebäude-Erde 11. Von besonderer Bedeutung ist die vorgenannte Verbindung, da sie einen Potentialausgleich 19 ermöglicht. Bei einer Änderung der Hausinstallation wird dabei diese Verbindung oft nicht mehr hergestellt. Eine Schutzschaltung 18 ist im Detail in Figur 3 dargestellt und wird durch zwei paarig an die beiden Zugangsleitungen 16 angeschlossene als Gasableiter 181 ausgeführte Schutzelemente gebildet. Die Gasableiter 181 sind ihrerseits je mit der Gebäude-Erde 11 verbunden. Bei Überschreiten der Spannung um einen gewissen Durchbruchwert Uₛ werden die Gasableiter niederohmig. Dadurch erreicht die von aussen eintreffende Energie - z.B. aufgrund einer Blitzeinwirkung - die angeschlossenen Kommunikations-oder Netzabschlussgeräten 20 nicht und werden somit geschützt. Qualitativ ist die |U| - R - Kennlinie der Figur 4 zu entnehmen.

Ein Ausführungsbeispiel der vorliegenden Erfindung betrifft ein in der Terminologie dieser Schrift genanntes Abschlussgerät, dass die Funktion eines Splitters, z.B. eines ADSL-Splitters 2 ausübt. Ein an das Abschlussgerät 1 angeschlossene ADSL-Modem 20' ist im Sinne der Terminologie dieser Schrift ein Kommunikationsgerät 20.

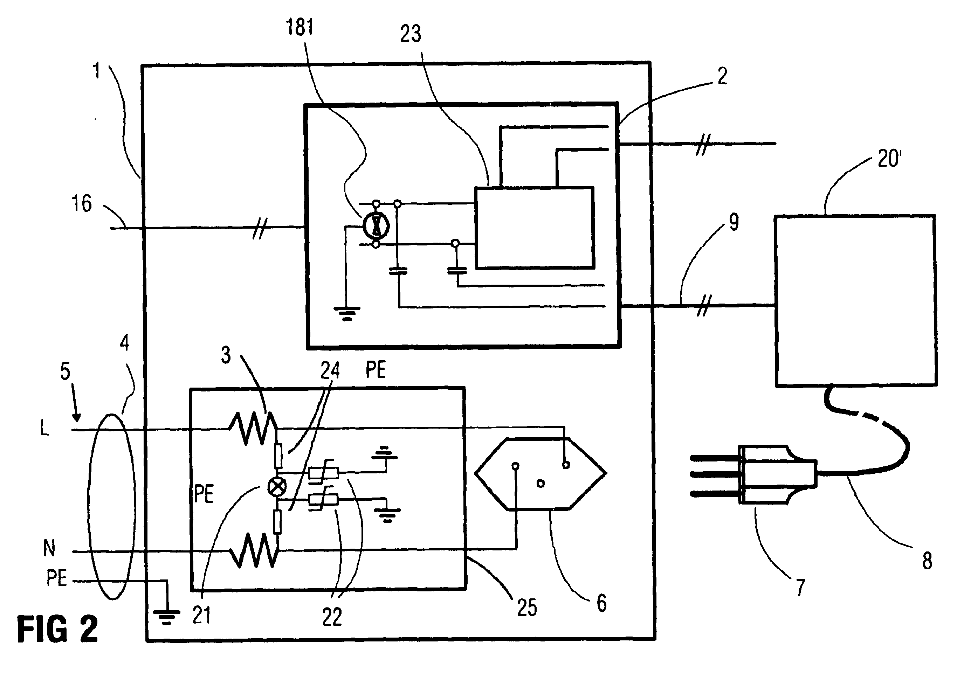

Fig. 2 zeigt das vorgenannte Ausführungsbeispiel in einer Detaildarstellung. Das Abschlussgerät 1 enthält einen ADSL-Splitter 2, wobei die einzelnen Komponenten dieses Splitters ohne Bezugszeichen angegeben sind. Das für ISDN-Dienste vorgesehene Frequenzband wird durch einen Tiefpass 23 (z.B. ein Tiefpass 6. Ordnung) gelassen. Vor dem Eingang des Tiefpasses 23 ist als Schutzelement ein Gasableiter 181 geschaltet, der eintreffende Überspannungen sowohl vom Tiefpass als auch von einem über je einen Kondensator gekoppelten Kommunikations-gerät 20' fernhält. Der wenigstens eine Gasableiter 181 ist mit der Schutz-Erde (protection Earth) PE des Abschlussgerätes 1 verbunden.

Das Abschlussgerät 1 weist ferner einen Eingang für die Versorgungsleitung 5 aus dem Versorgungsnetz 4 auf. Dieser Eingang kann steckbar oder fest verdrahtet ausgebildet sein. Im Abschlussgerät 1 können die für die Durchführung der Versorgungsleitung 5 vorgesehenen Schutzelemente diskret oder in einem sogenannten Überspannungsschutzmodul 25 ausgeführt sein. Nachstehend werden die schaltungsmässige Anordnung der Schutzelemente erläutert, die unabhängig von der Ausgestaltung der Schaltung sind. Null-Leiter N und Phase L werden optional über je eine Induktivität 3 geführt. Mit der Induktivität 3 können auftretende Transienten wirksam gedämpft werden. Zwischen Null-Leiter N und Phase L ist über je eine Sicherung 24 eine Kontroll-Lampe 21 angeschlossen. Die Kontroll-Lampe 21 kann zusätzlich noch über einen in Serie geschalteten Widerstand angeschlossen sein (nicht dargestellt in Fig. 2). An den beiden Sicherungen ist gemäss der Fig. 2 als Schutzelement je ein Metall-Oxid-Varistor 22 angeschlossen, die ihrerseits je mit der Schutz-Erde PE verbunden sind. Direkt an die Induktivitäten 3 ist in diesem Ausführungsbeispiel eine Steckdose 6 mit dem Null-Leiter N und der Phase L verbunden. Ebenso weist die Steckdose einen Stift für die Schutz-Erde PE auf. Das ADSL-Modem 20' ist über die ADSL-Strecke 9 mit der Zugangsleitung 16 verbunden. Das ADSL-Modem 20' benötigt eine Energieversorgung. Diese Versorgung erfolgt nun über ein Speisezuführung 8 und einem Stecker 7 von der vorgenannten Steckdose 6. Die vorstehend erläuterte Schaltung hält eintreffende Überspannungen (und deren Energie) von der Steckdose 6 und somit dem ADSL-Modem 20' fern.

Dieses Fernhalten wird durch die Metall-Oxid-Varistoren geleistet. In der Fig. 4 ist die |U| - R - Kennlinie qualitativ dargestellt. Mit Us ist der Durchbruchspannungswert bezeichnet. Liegt an einem solchen Metall-Oxid-Varistor 22 eine Spannung oberhalb des vorgenannten Durchbruchspannungswertes U_{S} an, wird der Metall-Oxid-Varistor niederohmig. In Bezug auf die Figur 4 und gemäss zu erfüllenden Schutzlevels ist nachstehend ein normkonformer Wert aufgeführt.
Schutzlevel 1 (gemäss ITU-K.21)
Uₛ = 1.5 kV;

In der Praxis zeigt sich, dass der vorgenannte Schutzlevel 1 von Abschlussgeräten im Test zwar eingehalten wird, jedoch dass trotz der Testkonformität angeschlossene Kommunikations-oder z.B. ISDN-Netzabschlussgeräte 20 Schaden nehmen. Deshalb ist in einer besonders vorteilhaften Weiterbildung der vorliegenden Erfindung vorgesehen, für die Durchbruchspannung Uₛ Werte vorzusehen, die oberhalb der Werte von anzuwendenden Normen liegen. Dazu folgende Werte, wobei mit der Abgabe dieser Werte es sehr vorteilhaft ist, dass ein bestimmter Bereich aus dem Intervall 2 kV .. 12 kV von einem solchen Gerät als Schutzlevel eingehalten ist:
a) Uₛ = 2 kV;
b) Uₛ = 6 kV;
c) Uₛ = 12 kV.

Die vorliegende Erfindung ist nicht auf die Ausführungsform mit einer über eine Zweidraht-Kupfer-Leitung geführten U- und ADSL-Strecke beschränkt, sondern kann für alle Netzabschlusskonfigurationen benutzt werden, bei denen gemischte Übertragungsverfahren zum Zuge kommen. Dabei können insbesondere auch mehr als zwei solche Übertragungsverfahren vorgesehen sein oder es kann für einen Dienst eine Duplizierung vorgesehen sein. Insbesondere ist es auch möglich, z.B. in einem geeignet gewählten xDSL-Übertragungsverfahren POTS- oder ISDN-Dienste zu übertragen.

Eine weitere Ausführungsform der vorliegenden Erfindung beinhaltet ein Cable-Modem, das an ein sogenanntes TV-Kabelnetz anschliessbar ist und über das nicht nur TV- und Radioprogramme verteilt werden, sondern auch eine adressierte Kommunikation erlaubt, wie z.B. von Internet-Diensten genutzt. Auch für diese Ausführungsform erweist sich ein integrierter Überspannungsschutz der vorstehend beschriebenen Art als sehr vorteilhaft, werden doch damit auch wertvollere Unterhaltungsgeräte wie. Z.B. TV-Geräte oder sog. Stereoanlagen vor einer Schädigung durch Einflüsse auf dem Zugangsnetz 13 oder dem 230 V Versorgungsnetz 4 zusätzlich bewahrt.

Die mechanische Ausführung des erfindungsgemässen Abschlussgerätes 1 kann folgende Formen beinhalten:
a) Unterputzgerät,
b) Aufputzgerät,
c) eigenständiges Gehäuse ohne Montage.

Die Ausführungsformen a) und b) haben bei geeigneter Planung der Steckdosen in einem Haus den besonderen Vorteil, dass der Benutzer mit einem leichten Zwang dazu geführt wird, den Stecker 7 für die Versorgung der an das Abschlussgerät 1 anzuschliessenden Netzabschluss- oder Kommunikationsgeräte 20 ebenfalls an das Abschlussgerät 1 anzuschliessen. Für die Signalzuführung zu den Kommunikations- oder Netzabschlussgerät 20 können ebenfalls über am Abschlussgerät 1 montierte Steckdosen geführt werden, vorzugsweise wird hiefür der Typ RJ-11 oder RJ-45 vorgesehen.

### Liste der verwendeten Bezugszeichen

- 1: Abschlussgerät
- 2: Splitter
- 3: Induktivität
- 4: Versorgungsnetz
- 5: Versorgungsleitung
- 6: Steckdose, 230 V Steckdose auf dem Abschlussgerät 1
- 7: Stecker, 230 V Stecker
- 8: Speisezuführung zu einem Netzabschlussgerät oder einem Kommunikationsgerät 20
- 9: ADSL-Strecke
- 10: Zentralen-Erde
- 11: Gebäude-Erde
- 12: Zentrale, abgesetzte Zentraleneinheit
- 13: Zugangsnetz
- 14: Haus
- 15: Mantel, elektrischer Schirm des Zugangskabel
- 16: Zugangsleitung
- 17: Hauseinführung
- 18: Elektrische Schutzschaltung bei der Hauseinführung
- 181: Gasableiter
- 19: Potentialausgleich
- 20: Netzabschlussgerät, Kommunikationsgerät
- 20': ADSL-Modem
- 21: Kontroll-Lampe
- 22: Varistor, Metall-Oxid-Varistor
- 23: Tiefpass
- 24: Sicherung
- 25: Überspannungsschutzmodul
- PE: Schutzleiter, Schutz-Erde, protection earth
- N: Null-Leiter
- L: Phase
- R: Widerstand in kΩ
- R₀: Widerstandswert im hochohmigen Zustand
- |U|: Betrag der Spannung
- Uₛ: Durchbruchspannung

### Liste der verwendeten Abkürzungen

- ADSL: Asymmetric Digital Subscriber Line/Loop
- ISDN: Integrated Services Digital Network

### Literaturliste

- [1]: ITU-T K.21
- [2]: ETSI ETR 328
- [3]: ITU G. 992.1
- [4]: WO 99/51019 A1 (RAYCHEM Corp) Access Network with an integrated splitter

## Patentansprüche

1. Abschlussgerät (1) zum Anschluss von Netzabschlussgeräten und/oder Kommunikationsgeräten (20, 20') an ein Zugangsnetz (13, 16), die zur Speisung mit elektrischer Energie über eine Versorgungsleitung (5) an ein Versorgungsnetz (4) anschliessbar sind, wobei
i) die Versorgungsleitung (5) über das Abschlussgerät (1) geführt wird und einen Schutzleiter (PE) aufweist;
ii) das Abschlussgerät (1) elektrische Schutzelemente (22, 24, 181,..) aufweist, um die angeschlossenen Netzabschlussgeräte und/oder Kommunikationsgeräte (20, 20') vor Beschädigung zu bewahren, die durch Überspannungseinwirkungen auf dem Versorgungsnetz (4) oder dem Zugangsnetz (13, 16) entstehen;
**dadurch gekennzeichnet, dass**
das Abschlussgerät (1) einen ADSL-Splitter (2) enthält, wobei das Abschlussgerät (1) und der ADSL-Splitter (2) mit dem Schutzleiter (PE) verbunden sind.

2. Abschlussgerät (1) nach Anspruch 1,
**dadurch gekennzeichnet, dass**
die Schutzelemente (22, 24, 181,..) mit dem Schutzleiter (PE) elektrisch verbunden sind und dass das Abschlussgerät (1) eine Steckdose (6) für die Speisung eines Netzabschluss- oder Kommunikationsgerätes (20') aufweist.

3. Abschlussgerät (1) nach Anspruch 2,
**dadurch gekennzeichnet, dass**
zwei Leiter (L, N) der Versorgungsleitung (5) über je eine Induktivität (3) und eine Sicherung (24) mit je einem Schutzelement (22) verbunden sind.

4. Abschlussgerät (1) nach Anspruch 3,
**dadurch gekennzeichnet, dass**
zwischen den beiden Sicherungen (24) eine Kontroll-Lampe (21) geschaltet ist und die Induktivitäten (3) mit je einem Kontakt der Steckdose (6) direkt verbunden sind.

5. Abschlussgerät (1) nach einem der Ansprüche 1 bis 4,
**dadurch gekennzeichnet, dass**
das Abschlussgerät (1) für eine feste Montage als Unterputz-oder Aufputzgerät ausgebildet ist.

6. Abschlussgerät (1) nach einem der Ansprüche 1 bis 5,
**dadurch gekennzeichnet, dass**
die Schutzelemente (22, 24, 181) so dimensioniert sind, dass das Abschlussgerät (1) die Anforderungen gemäss ITU K.21 für einen Überspannungsschutzlevel von 1.5 kV erfüllt.

7. Abschlussgerät (1) nach einem der Ansprüche 1 bis 5,
**dadurch gekennzeichnet, dass**
die Schutzelemente so dimensioniert sind, dass das Abschlussgerät Anforderungen für einen Überspannungsschutzlevel in einem Bereich von 2 kV bis 12 kV erfüllt.

## Revendications

1. Appareil (1) de jonction pour raccorder des terminaux de réseau et/ou des terminaux (20, 20') de communication à un réseau (13, 16) d'accès, qui peuvent être, pour l'alimentation en énergie électrique, raccordés à un réseau (4) d'alimentation par une ligne (5) d'alimentation,
dans lequel
i) la ligne (5) d'alimentation passe par l'appareil (1) de jonction et comporte un conducteur (PE) de protection ;
ii) l'appareil (1) de jonction a des éléments (22, 24, 181, ...) électriques de protection pour protéger les appareils de connexion du réseau et/ou les appareils (20, 20') de communication de tout dommage qui proviendrait d'effets de surtension sur le réseau (4) d'alimentation ou sur le réseau (13) d'accès,
**caractérisé**
**en ce que** l'appareil (1) de jonction comporte un diviseur (2) ADSL, l'appareil (1) de jonction et le diviseur (2) ADSL étant reliés au conducteur (PE) de protection.

2. Appareil (1) de jonction suivant la revendication 1,
**caractérisé**
**en ce que** les éléments (22, 24, 181, ...) de protection sont reliés électriquement au conducteur (PE) de protection et en ce que l'appareil (1) de jonction a une prise (6) de courant pour l'alimentation dans le terminal (20') de réseau ou de communication.

3. Appareil (1) de jonction suivant la revendication 2, **caractérisé**
**en ce que** deux conducteurs (L, N) de la ligne (5) d'alimentation sont reliés par, respectivement, une inductance (3) et un fusible (24) à, respectivement, un élément (22) de protection.

4. Appareil (1) de jonction suivant la revendication 3,
**caractérisé**
**en ce qu'**il est monté entre les deux fusibles (4) une lampe (21) de contrôle et les inductances (3) sont reliées directement à respectivement un contact de la prise (6) de courant.

5. Appareil (1) de jonction suivant l'une des revendications 1 à 4,
**caractérisé**
**en ce que** l'appareil (1) de jonction est constitué, pour un montage fixe, en tant qu'appareil encastré ou qu'appareil à pose sur crépis.

6. Appareil (1) de jonction suivant l'une des revendications 1 à 5,
**caractérisé**
**en ce que** les éléments (22, 24, 181) de protection ont des dimensions telles que l'appareil (1) de jonction satisfait aux exigences suivant ITU K.21 pour un niveau de protection de surtension de 1,5 kV.

7. Appareil (1) de jonction suivant l'une des revendications 1 à 5,
**caractérisé**
**en ce que** les éléments de protection ont des dimensions telles que l'appareil de jonction satisfait à des exigences pour un niveau de protection en surtension dans une plage de 2 kV à 12 kV.

## Claims

1. Termination device (1) for connecting network termination units and/or communication devices (20, 20') to an access network (13, 16), which can be connected for feeding with electrical energy via a supply line (5) to a supply network (4), with
i) the supply line (5) being routed via the termination device (1)
and featuring a protective earth lead (PE);
ii) the termination device (1) featuring electrical protection elements (22, 24, 181,..) to prevent damage to the connected network termination units and/or communication units (20, 20') which occurs as a result of overvoltage effects on the supply network (4) or the access network (13, 16);
**characterized in that**
the termination device (1) contains an ADSL splitter (2), with the termination device (1) and the ADSL splitter (2) being connected to the protective earth (PE).

2. Termination device (1) in accordance with claim 1,
**characterized in that**
the protective elements (22, 24, 181,..) are electrically connected to the protective earth (PE) and that the termination device (1) features a socket (6) for feeding power to a network termination unit or communication unit (20').

3. Termination device (1) in accordance with claim 2,
**characterized in that**
two conductors (L, N) of the power supply line (5) are each connected via an inductor (3) and a fuse (24) to a protection element (22) in each case.

4. Termination device (1) in accordance with claim 3,
**characterized in that**
a control lamp is (21) is connected between the two fuses (24) and the inductors (3) are each connected directly to one contact of the socket (6).

5. Termination device (1) in accordance with one of the claims 1 to 4,
**characterized in that**
the termination device (1) is embodied for fixed mounting as a flush-mounted or surface-mounted device.

6. Termination device (1) in accordance with one of the claims 1 to 5,
**characterized in that**
the protection elements (22, 24, 181) are dimensioned so that the termination device (1) fulfills the requirements in accordance with ITU K.21 for an overvoltage protection level of 1.5 kV.

7. Termination device (1) in accordance with one of the claims 1 to 5,
**characterized in that**
the protection elements are dimensioned so that the terminating device fulfills the requirements for an overvoltage protection level in the range of 2 kV to 12 kv.
